# EUROPÄISCHE PATENTANMELDUNG

(11) **EP 1 894 697 A1**
(43) Veröffentlichungstag der Anmeldung: **05.03.2008**
(21) Anmeldenummer: 07011653.8
(22) Anmeldetag: 14.06.2007
(51) Int. Cl.: B29C 45/27

(54) **Einspritzdüse zur Führung von Schmelzemasse in einer Kunststoffspritzgiessform**

(30) Priorität: 01.09.2006 DE 102006041329
(71) Anmelder: SFR Formenbau GmbH, 72770 Reutlingen (DE)
(72) Erfinder: Reinl, Horst, 72793 Pfullingen (DE)
(74) Vertreter: Ostriga, Sonnet, Wirths & Roche

(57) **Zusammenfassung**

Die Erfindung betrifft eine Einspritzdüse zur Führung von Schmelzemasse in einer Kunststoffspritzgießform od. dgl., mit einem Schmelzekanal (14) und mit einem eine Düsenspitze (12) aufweisenden Düsenkern (11), sowie mit einem Dichtring, welcher der Düsenspitze (12) oder dem Düsenkern (11) zugeordnet ist.

Die Besonderheit besteht darin, dass die Düsenspitze (12) oder der Düsenkern (11) mit einem Außengewinde (17) versehen ist, welches mit einem Innengewinde (18) des Dichtringes (13) zusammenwirkt und dass zwischen Außengewinde (17) und Innengewinde (18) zusätzlich ein Klemmschluss und/oder Formschluss ausgebildet ist.

## Beschreibung

Die Erfindung betrifft eine Einspritzdüse zur Führung von Schmelzemasse in einer Kunststoffspritzgießform gemäß dem Oberbegriff des Anspruchs 1.

Eine solche offenkundig vorbenutzte Düse weist einen Düsenkern mit einer Bohrung auf, in welcher eine Düsenspitze verschraubt ist. Die Düsenspitze hat die Aufgabe, die Kunststoffschmelze an die Einspritzöffnung zu führen. Darüber hinaus kann die Düsenspitze die Aufgabe der Wärmeleitung haben, damit die Schmelze bis zur Abgabe an die Form auf der gewünschten Temperatur gehalten wird. Die Düsenspitze kann hierfür aus einem gut wärmeleitfähigen Material, wie z.B. Kupferberyllium, gefertigt sein.

Die Düsenspitze oder der Düsenkern der bekannten Düse sind mit einem Dichtring versehen, welcher aus einem schlecht wärmeleitfähigen Material besteht. Der Dichtring ist derart bearbeitet, dass er gegenüber einer Axialöffnung der Formplatte mit engem Schiebesitz hin und her beweglich ist, damit er in der Lage ist, eine Längenausdehnung der gesamten Düse bzw. der Düsenspitze aufzufangen.

Um eine Axialbewegung des Dichtrings auf der Spitze oder auf dem Düsenkörper zu verhindern, wurde der Dichtring bei der offenkundig vorbenutzten Düse aufgeschrumpft. Dafür wurde die Düsenspitze bzw. der Düsenkern auf eine Temperatur unterhalb der Raumtemperatur abgekühlt und der Dichtring, welcher z. B. aus Titan, einer Titanlegierung oder aus Stahl bestehen kann, auf etwa 300 Grad erhitzt. Anschließend wurde der Dichtring auf den Düsenkern bzw. die Düsenspitze aufgesetzt. Nach dem Abkühlen des Dichtringes ergab sich dann die feste Schrumpfverbindung.

Bei der Befestigung des Dichtringes mittels einer Schrumpfverbindung trat jedoch während des Fertigungsprozesses, bei welchem die Düse starken Temperaturschwankungen unterliegt, insbesondere bei der Materialpaarung Kupferberyllium / Stahl bzw. Kupferberyllium / Titan eine Materialermüdung des Titans bzw. des Stahls auf. Die Ausdehnungs- / Schrumpfbewegung des Düsenkerns führte zu einer Überlastung des Dichtring-Werkstoffs, so dass der Dichtring gesprengt wurde und sich von dem vorgesehenen Sitz entfernte. Die Dichtfunktion konnte der Dichtring danach nicht mehr wahrnehmen.

Teilweise trat auch eine plastische Verformung auf, so dass der Dichtring nach dem Schrumpfprozess der Düsenspitze bzw. des Düsenkerns in seiner ausgedehnten Stellung verblieb. Die Dichtfunktion war dann ebenfalls nicht mehr gewährleistet.

Eine Befestigung des Dichtringes durch Verlöten war nicht möglich, da sich verschiedene Werkstoffpaarungen nicht verlöten lassen.

Auch Versuche, bei denen der Dichtring durch Laserschweißen am Düsenkern bzw. der Düsenspitze befestigt wurde, war nicht Erfolg versprechend, weil durch die Laserverschweißung Materialspannungen entstehen, die wiederum zu Rissen im Dichtring führen.

Aufgabe der Erfindung ist es, eine Axialsicherung zu schaffen, bei der die vorgenannten Nachteile nicht auftreten.

Die Aufgabe wird gelöst mit den Merkmalen des Anspruchs 1, insbesondere mit dessen kennzeichnenden Merkmalen.

Das wesentliche Prinzip der Erfindung besteht darin, dass der Dichtring ein Innengewinde aufweist, mittels welchem er auf ein Außengewinde des Düsenkerns oder der Düsenspitze aufgeschraubt werden kann. Zusätzlich zu dieser formschlüssigen Verbindung ist zur Arretierung der Gewindeverbindung eine Klemmschluss- oder Formschlussverbindung vorgesehen.

Zwischen Dichtring und Düsenspitze oder Düsenkern ist eine klemm- und/oder formschlüssige Verbindung vorgesehen. Erfindungsgemäß kann die Verbindung unmittelbar oder mittelbar erfolgen.

Der Vorteil der Erfindung besteht darin, dass die Düse funktionssicher bezüglich der Formplatte abgedichtet ist und die Dichtung eine wesentlich längere Lebensdauer aufweist. Mit der erfindungsgemäßen Ausbildung der Düse kann eine einfache Montage des Dichtringes erfolgen. Ein Lösen des Dichtringes von dem vorgesehenen Sitz wird sicher verhindert. Aufgrund der Klemmschluss- oder Formschlussverbindung kann zwischen Dichtring und Düsenspitze oder Düsenkern eine größere Passung gewählt werden, so dass eine Materialermüdung und damit ein Sprengen oder ein plastisches Verformen des Dichtringes nicht auftritt.

Gemäß einer ersten Ausführungsform weist die Düsenspitze oder der Düsenkern einen Anschlag auf, gegen welchen der Dichtring unter Bildung eines Klemmschlusses anläuft. Der Anschlag bildet somit ein Widerlager für den Dichtring, der zwischen dem Anschlag und dem Gewinde verklemmt werden kann. Bei der Verklemmung werden das Innengewinde des Dichtringes und das Außengewinde der Düsenspitze bzw. des Düsenkerns mit einer großen Kraft aneinandergepresst. Es resultiert eine hohe Reibkraft, die ein ungewolltes Lösen des Dichtringes verhindert.

Einer weiteren Ausführungsform gemäß ist der Anschlag von einem Ringsteg gebildet. Der Ringsteg kann umlaufend oder auch als Ringabschnitt ausgebildet sein. Alternativ bestehen selbstverständlich auch andere Möglichkeiten der Ausbildung des Stegs. Beispielsweise können lediglich punktförmige Anschläge an der Düsenspitze oder am Düsenkern ausgebildet sein.

Gemäß einer weiteren Ausgestaltung der Erfindung ist vorgesehen, dass sich der Durchmesser des Außengewindes der Düsenspitze oder des Düsenkerns in Aufschraubrichtung des Dichtringes konisch vergrößert. Durch die Aufweitung des Gewindes in Aufschraubrichtung des Dichtringes kann letzterer ebenfalls auf dem Gewinde verklemmt werden.

Gemäß einer weiteren Ausführungsform ist das Außengewinde der Düsenspitze oder des Düsenkerns zumindest teilweise chemisch vernickelt. Durch die Nickelschicht wird das Spiel zwischen dem Innengewinde des Dichtringes und dem Außengewinde der Düsenspitze bzw. des Düsenkerns verringert und somit eine kraftschlüssige Verbindung erzeugt.

Gemäß einer anderen Ausführungsform ist vorgesehen, dass der Dichtring eine quer zur Schraubachse verlaufende Durchgangsbohrung und die Düsenspitze oder der Düsenkern eine quer zur Schraubachse verlaufende Bohrung aufweist, in welcher ein Stift, eine Drehung des Dichtringes formschlüssig verhindernd, angeordnet werden kann. Auf diese Weise können die Bohrungen im Dichtring sowie in der Düsenspitze oder im Düsenkern fluchtend zueinander positioniert und die Stiftschraube jeweils mit einem Teil in beiden Bohrungen angeordnet werden. Die Stiftschraube verhindert dann durch Formschluss ein Lösen des Dichtringes. Der Stift kann dabei ein Außengewinde aufweisen, das mit einem Innengewinde der Durchgangsbohrung im Dichtring korrespondiert.

Weitere Vorteile ergeben sich anhand von in den Figuren dargestellten Ausführungsbeispielen. Es zeigen:
Fig. 1 einen Axialschnitt einer Düsenspitze der erfindungsgemäßen Düse,
Fig. 2 einen Axialschnitt der Düsenspitze in Einzelteildarstellung,
Fig. 3 einen Axialschnitt des Dichtringes in Einzelteildarstellung,
Fig. 4 einen Axialschnitt einer anderen Ausführungsform der erfindungsgemäßen Düse,
Fig. 5 einen Axialschnitt des Düsenkerns gemäß Fig. 4 in Einzelteildarstellung und
Fig. 6 einen Axialschnitt des Dichtringes gemäß Fig. 4 in Einzelteildarstellung.

Eine Einspritzdüse zur Führung von Schmelzemasse in einer Kunststoffspritzgießform insgesamt ist mit der Bezugsziffer 10 bezeichnet. Gleiche Bezugszeichen in den unterschiedlichen Figuren bezeichnen auch bei unterschiedlichen Ausführungsbeispielen analoge Teile.

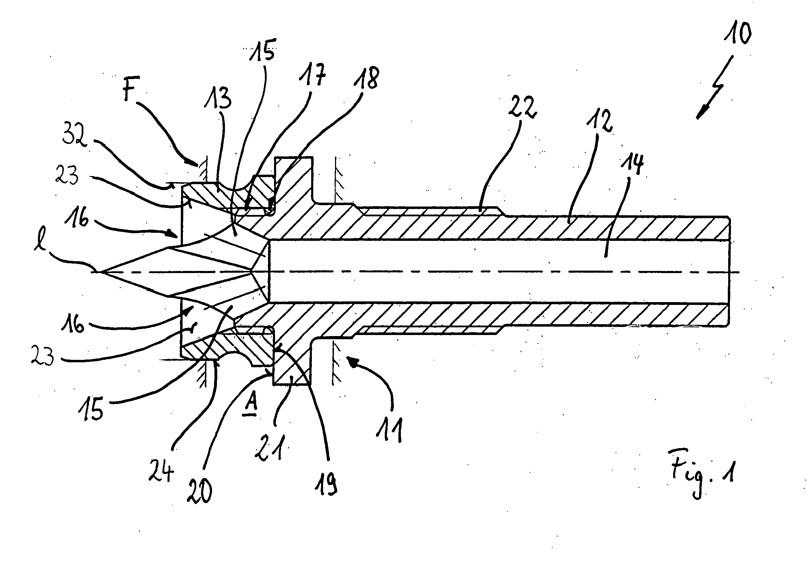

Die Düse 10 weist gemäß Fig. 1 im Wesentlichen einen Düsenkern 11 sowie eine Düsenspitze 12 auf. Der Düsenkern 11 ist lediglich angedeutet dargestellt. In dem Düsenkern 11 ist eine nicht dargestellte Bohrung ausgebildet, die mit einem Innengewinde versehen ist. Die Düsenspitze 12, deren Mittelachse mit I bezeichnet ist, weist ein Außengewinde 22 auf, welches mit dem nicht gezeigten Innengewinde des Düsenkerns 11 verschraubt ist. Ein nicht dargestellter Schmelzekanal des Düsenkerns 11 fluchtet mit einem Schmelzekanal 14 der Düsenspitze 12. Die Schmelze kann daher über den Schmelzekanal 14 sowie über zwei sich vom Schmelzekanal 14 abzweigende Teilkanäle 15 Austrittsöffnungen 16 zugeleitet werden, über welche die Schmelze an einen nicht dargestellten Formhohlraum abgegeben wird.

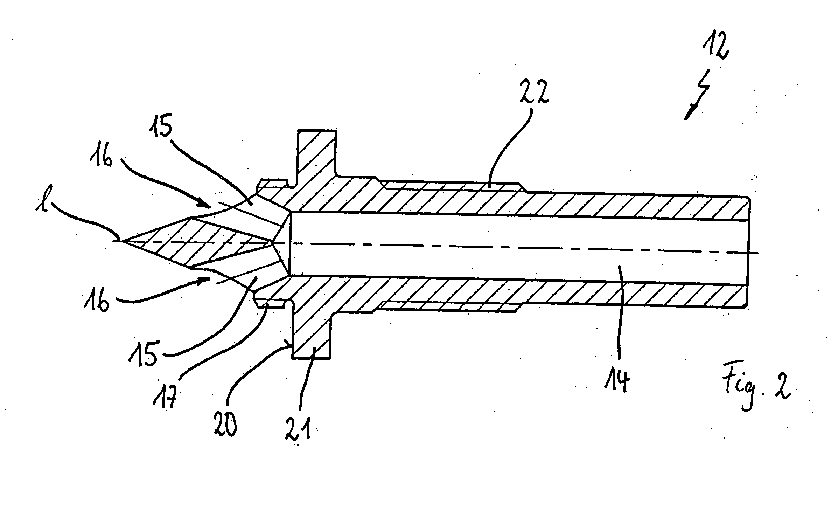

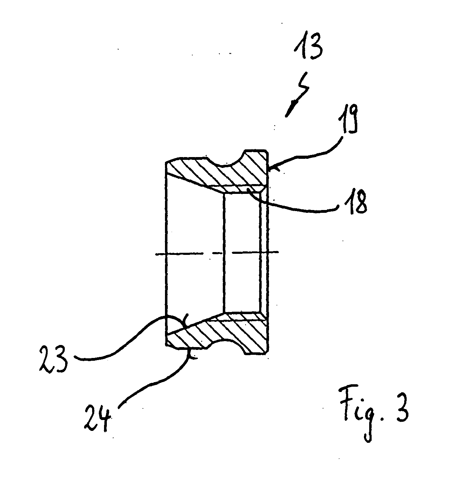

Um die Düsenspitze gegenüber dem Formhohlraum einer nur angedeuteten Formplatte F abzudichten, ist an der Düsenspitze 12 ein Dichtring 13 befestigt. Mittels einer Innenfläche 23 des Dichtringes 13 wird die Schmelze einer Öffnung 32 der Formplatte F zugeleitet. Eine kreiszylindrische Außenfläche 24 (Dichtfläche) des Dichtrings 13 bildet mit der Öffnung 32 der Formplatte F einen dichtenden Schiebesitz. Der Dichtring 13 weist ein Innengewinde 18 (siehe Fig. 3) auf, mittels welchem er auf einem Außengewinde 17 (siehe z. B. Fig. 2) der Düsenspitze 12 verschraubt ist. Die Montage des Dichtringes 13 kann somit sehr einfach erfolgen.

Ferner weist die Düsenspitze 12 einen Ringsteg 21 auf, dessen sich radial erstreckende Anschlagfläche 20 als Widerlager für eine sich radial erstreckende Außenfläche 19 des Dichtringes 13 dient. Der Dichtring 13 kann beim Aufschrauben auf die Düsenspitze 12 gegen die Anschlagfläche 20 verspannt werden, wodurch ein ungewolltes Lösen des Dichtringes 13 verhindert wird. Das Verspannen erfolgt auf die nachfolgend beschriebene Weise. Nach dem Kontaktieren der Außenfläche 19 des Dichtringes 13 mit der Anschlagfläche 20 des Ringstegs 21 wird bei weiterem Verdrehen des Dichtringes 13 in Aufschraubrichtung das Außengewinde 17 gegen das Innengewinde 18 kraftschlüssig verspannt. Dabei treten zwischen Außengewinde 17 und Innengewinde 18 große Reibkräfte auf, die ein ungewolltes Lösen des Dichtringes 13 verhindern.

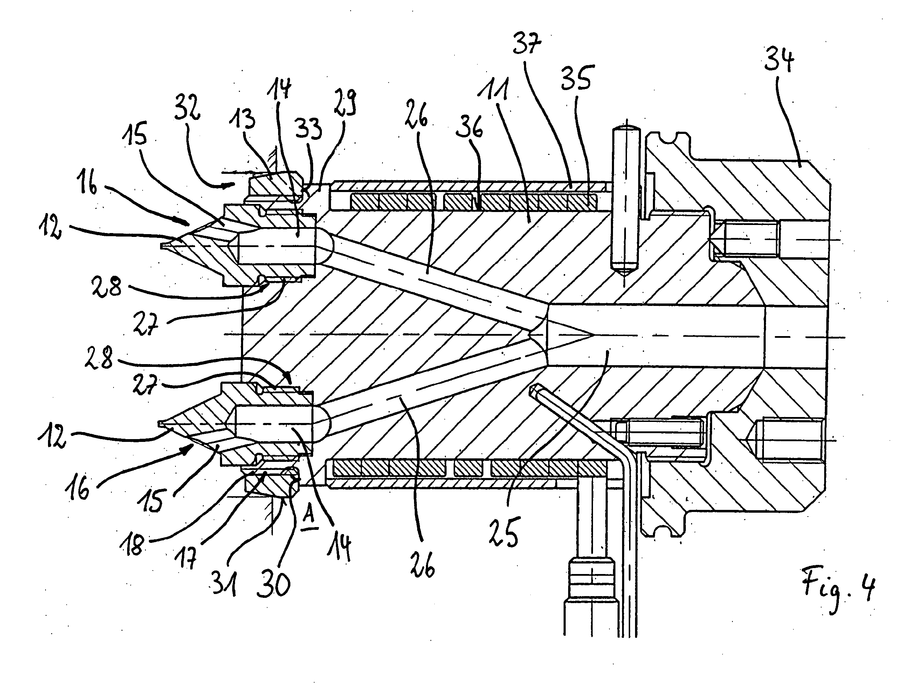

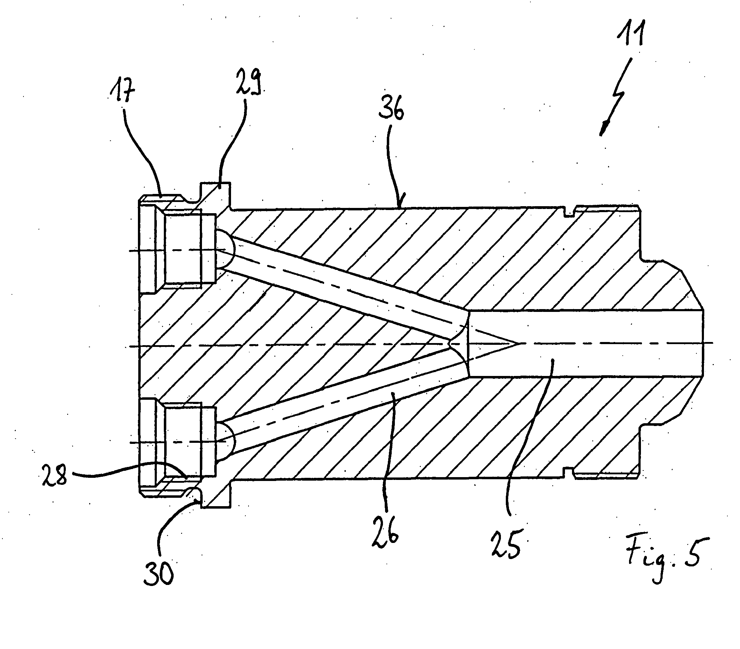

In den Fig. 4 bis 6 ist eine andere Ausführungsform der erfindungsgemäßen Düse dargestellt. Die Düse 10 gemäß Fig. 4 weist einen Düsenkern 11 auf, an dem mehrere Düsenspitzen 12 schraubbefestigt sind. Die Düsenspitzen 12 weisen jeweils ein Außengewinde 27 auf, welches in einem korrespondierenden Innengewinde 28 des Düsenkerns 28 verschraubt ist. Zur Montage am Werkzeug ist der Düsenkern 11 mit einem Einbauadapter 34 verschraubt. Der Düsenkern 11 ist mit einem gewendelten Rohrheizkörper 35 ausgestattet, welcher eine Außenfläche 36 des Düsenkerns 11 umgibt. Der Rohrheizkörper 35 wird von einer Hülse 37 an der Außenfläche 36 gehalten.

Von einem Schmelzekanal 25 des Düsenkerns 11 gehen mehrere Zweigkanäle 26 ab, die zu Teilkanälen 14 der einzelnen Düsenspitzen 12 führen. Von den Teilkanälen 14 zweigen wiederum Ausströmkanäle 15 ab, welche mit Austrittsöffnungen 16 versehen sind.

Am Düsenkern 11 ist ein Dichtring 13 befestigt, der alle Düsenspitzen 12 umschließt. Eine kreiszylindrische Außenfläche 31 des Dichtringes 13 bildet mit der Öffnung 32 der Formplatte F einen dichtenden Schiebesitz. Zur Befestigung am Düsenkern 11 weist der Dichtring 13 ein Innengewinde 18 auf, welches mit einem Außengewinde 17 des Düsenkerns 11 zusammenwirkt. Der Düsenkern 11 weist einen Ringsteg 29 auf, der eine sich radial erstreckende Anschlagfläche 30 für den Dichtring 13 ausbildet. Die Anschlagfläche 30 dient als Widerlager für eine sich radial erstreckende Außenfläche 33 des Dichtringes 13, so dass Letzterer fest auf dem Außengewinde 17 verspannt werden kann.

Bei den zuvor dargestellten Ausführungsbeispielen wird der Dichtring 13 gegen eine Anschlagfläche 20 bzw. 30 kraftschlüssig verspannt. Alternativ zu den dargestellten Ausführungsbeispielen kann beispielsweise der Dichtring 13 eine Bohrung mit einem Durchgangsinnengewinde aufweisen, die quer zu einer Längsachse des Düsenkerns 11 angeordnet ist. Die Bohrung kann mit einer ebenfalls quer zur Längsachse des Düsenkerns 11 verlaufenden Bohrung im Düsenkern 11 fluchtend positioniert und eine Stiftschraube mit einem Teil in jeder der Bohrungen angeordnet werden. Auf diese Weise wird durch Formschluss verhindert, dass der Dichtring 13 sich ungewollt lösen und axial von seinem Sitz bewegen kann.

Gemäß einer weiteren Alternative, die ebenfalls nicht dargestellt ist, kann sich der Durchmesser des Außengewindes der Düsenspitze bzw. des Düsenkerns in Einschraubrichtung des Dichtringes 13 konisch vergrößern, so dass der Dichtring 13 auf dem konischen Außengewinde verklemmbar ist.

Alternativ oder zusätzlich kann auf dem Außengewinde der Düsenspitze oder des Düsenkerns eine chemische Nickelschicht vorgesehen sein, mittels welcher das Spiel zwischen Dichtring und Düsenspitze oder Düsenkern verringert und eine kraftschlüssige Verbindung durch Reibschluss erzeugt wird.

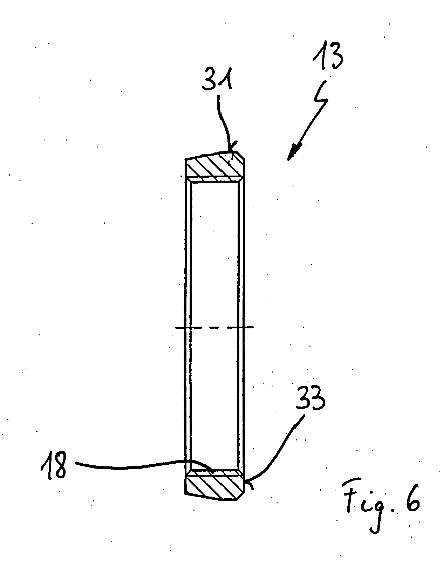

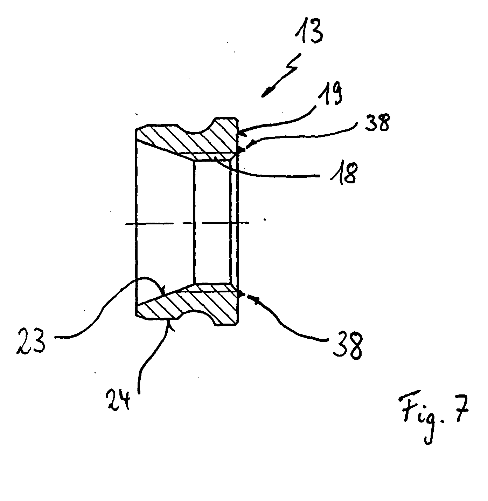

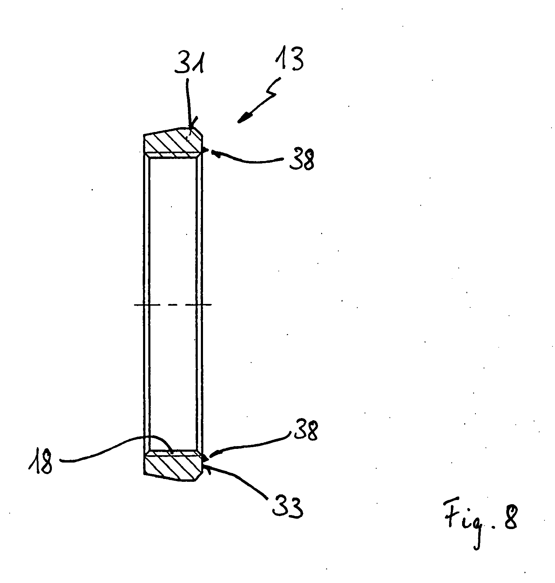

Der in Fig. 3 dargestellte Dichtring 13 kann gemäß einer alternativen Ausführungsform, die in den Fig. 7 gezeigt ist, eine umlaufend ringförmige Kante 38 aufweisen. Ebenfalls kann der in Fig. 6 dargestellte Dichtring 13 gemäß einer alternativen Ausführungsform, die in Fig. 8 gezeigt ist, eine umlaufend ringförmige Kante 38 aufweisen. Die Kante 38 kann z.B. stoffschlüssig am Dichtring 13 vorgesehen sein.

Die Kante 38 bewirkt beim Kontakt mit der Anschlagfläche 20 der Düsenspitze 12 bzw. beim Kontakt mit der Anschlagfläche 30 des Düsenkerns 11 eine zusätzliche Abdichtung, die ein Austreten der Kunststoffschmelze in den Außenraum A verhindert.

## Patentansprüche

1. Einspritzdüse zur Führung von Schmelzemasse in einer Kunststoffspritzgießform od. dgl., mit einem Schmelzekanal (14) und mit einem eine Düsenspitze (12) aufweisenden Düsenkern (11), sowie mit einem Dichtring, welcher der Düsenspitze (12) oder dem Düsenkern (11) zugeordnet ist, **dadurch gekennzeichnet, dass** die Düsenspitze (12) oder der Düsenkern (11) mit einem Außengewinde (17) versehen ist, welches mit einem Innengewinde (18) des Dichtringes (13) zusammenwirkt und dass zwischen Dichtring (13) und Düsenspitze (12) oder zwischen Dichtring (13) und Düsenkern (11) zusätzlich ein Klemmschluss und/oder ein Formschluss ausgebildet ist.

2. Einspritzdüse, **dadurch gekennzeichnet, dass** die Düsenspitze (12) oder der Düsenkern (11) einen Anschlag (21) aufweist, gegen welchen der Dichtring (13) anläuft und einen Klemmschluss bewirkt.

3. Einspritzdüse, **dadurch gekennzeichnet, dass** der Anschlag von einem Ringsteg (21) gebildet ist.

4. Einspritzdüse, **dadurch gekennzeichnet, dass** sich der Durchmesser des Außengewindes (17) der Düsenspitze (12) oder des Düsenkerns (11) in Aufschraubrichtung des Dichtringes (13) konisch vergrößert.

5. Einspritzdüse, **dadurch gekennzeichnet, dass** das Außengewinde (17) der Düsenspitze (12) oder des Düsenkerns (11) zumindest teilweise chemisch vernickelt ist.

6. Einspritzdüse, **dadurch gekennzeichnet, dass** der Dichtring (13) eine quer zur Schraubachse (a) verlaufende Durchgangsbohrung und die Düsenspitze (12) oder der Düsenkern (11) eine quer zur Schraubachse (a) verlaufende Bohrung aufweist, in welcher ein Stift, eine Drehung des Dichtringes (13) formschlüssig verhindernd, angeordnet werden kann.

7. Einspritzdüse, **dadurch gekennzeichnet, dass** die Durchgangsbohrung des Dichtringes (13) mit einem Innengewinde und der Stift mit einem Außengewinde versehen ist.
